(19) **Europäisches Patentamt / European Patent Office / Office européen des brevets**

(11) **EP 4 251 993 B1**

(12) **EUROPEAN PATENT SPECIFICATION**

(45) Date of publication and mention
of the grant of the patent:
**22.01.2025 Bulletin 2025/04**

(21) Application number: **21835826.5**

(22) Date of filing: **24.11.2021**

(51) International Patent Classification (IPC):
**G01N 30/86** (2006.01) **G01N 30/64** (2006.01)
**G01N 30/74** (2006.01)

(52) Cooperative Patent Classification (CPC):
**G01N 30/8624; G01N 30/64; G01N 30/74**

(86) International application number:
**PCT/IB2021/060924**

(87) International publication number:
**WO 2022/112965 (02.06.2022 Gazette 2022/22)**

(54) **METHOD IMPLEMENTED BY MEANS OF A COMPUTER FOR DETERMINING RETENTION TIMES AND CONCENTRATION VALUES OF ANALYTES IN A MIXTURE**

COMPUTERIMPLEMENTIERTE METHODE ZUR BESTIMMUNG DER RETENTIONSZEITEN UND KONZENTRATIONSWERTEN VON ANALYTEN IN EINER MISCHUNG

MÉTHODE INFORMATIQUE POUR LA DÉTERMINATION DE TEMPS DE RÉTENTION ET DE VALEURS DE CONCENTRATION D'ANALYTES DANS UN MÉLANGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2020 IT 202000028322**

(43) Date of publication of application:
**04.10.2023 Bulletin 2023/40**

(73) Proprietor: **Universita' di Pisa**
**56126 Pisa (IT)**

(72) Inventors:
• **CUCCHIARA, Federico**
**56126 Pisa (IT)**
• **LUCI, Giacomo**
**56126 Pisa (IT)**
• **DANESI, Romano**
**56126 Pisa (IT)**
• **DI PAOLO, Antonello**
**56126 Pisa (IT)**

(74) Representative: **Deambrogi, Edgardo et al**
**Jacobacci & Partners S.p.A.**
**Corso Emilia 8**
**10152 Torino (IT)**

(56) References cited:
• FELINGER A: "QUANTITATIVE ANALYSIS (9)", 1 January 1998, DATA ANALYSIS AND SIGNAL PROCESSING IN CROMATOGRAPHY, ELSEVIER, AMSTERDAM, NL, PAGE(S) 191 - 330, ISBN: 978-0-444-82066-2, XP002529399
• BRISTOW ET AL: "VOLTINT: A Matlab^(R)-based program for semi-automated processing of geochemical data acquired by voltammetry", COMPUTERS & GEOSCIENCES, PERGAMON, AMSTERDAM, NL, vol. 34, no. 2, 16 November 2007 (2007-11-16), pages 153 - 162, XP022348622, ISSN: 0098-3004, DOI: 10.1016/ J.CAGEO.2007.01.005
• WAHAB M FAROOQ ET AL: "Total peak shape analysis: detection and quantitation of concurrent fronting, tailing, and their effect on asymmetry measurements", JOURNAL OF CHROMATOGRAPHY A, ELSEVIER, AMSTERDAM, NL, vol. 1509, 13 June 2017 (2017-06-13), pages 163 - 170, XP085110340, ISSN: 0021-9673, DOI: 10.1016/ J.CHROMA.2017.06.031

**Description**

This invention relates generally to the analysis of chromatographic data, such as specifically retention times and concentration values of analytes in a mixture, and in particular to the automation of the interpretation of data from a chromatographic analysis, such as for example a high pressure liquid chromatography with detection of analytes by fluorometric means, by electrochemical means, or by ultraviolet radiation.

More particularly, the invention relates to a computer-implemented method for determining retention times and concentration values of a plurality of analytes in a mixture in a chromatographic analysis process based on the elution of the analytes of said mixture from a predetermined stationary retention phase to a predetermined mobile eluting phase. Chromatography is based on the principle that several analytes in a mixture, after adhering to the surface of a solid or liquid stationary phase, are separated from each other during the auxiliary passage of a mobile phase (eluent), the function of which is to transport the analytes. Effective factors in this separation process include molecular characteristics related to adsorption (solid-liquid), partition (solid-liquid), and affinity or differences between the molecular weights of the analytes. Because of these differences, some analytes are retained more by the stationary phase and elute more slowly during a chromatographic "run," while others pass more rapidly into the mobile phase.

Chromatography is a valuable tool for biochemists and analytical chemists and may be easily applied in studies performed in clinical laboratories. For example, liquid chromatography is the most widely used technique for drug detection and quantification. More specifically, High-Pressure/Performance Liquid Chromatography (HPLC) works by passing the mobile phase, loaded with analytes through chromatographic columns at a pressure between 1013.25 kPa and 40530.00 kPa (10 and 400 atm) and at a high flow rate, e.g., between 0.1 and 5 cm/sec. In this technique, the use of small particles and the application of high pressure over the eluent flow speed improve chromatographic separation and it is possible to complete the analysis in a short time.

The article "QUANTITATIVE ANALYSIS (9)" (FELINGER A, published 1 January 1998 in "DATA ANALYSIS AND SIGNAL PROCESSING IN CROMATOGRAPHY", ELSEVIER, AMSTERDAM, NL, PAGE(S) 191 - 330, ISBN: 978-0-444-82066-2) discloses a method for the determination of the retention times and concentration values of a plurality of analytes in a mixture in a chromatographic analysis process based on the elution of the analytes of said mixture from a predetermined stationary retention phase to a predetermined eluent mobile phase.

Regardless of the method and instrumental technique, the separation and detection of analytes is analyzed through the generation of complex graphs, called chromatograms or spectra, which express the absorbance intensity of an excitation radiation by the eluting solution as a function of predetermined physical quantities peculiar to the analytes found in said solution, such as the retention time on the stationary phase, the numerosity of the analytes in solution, the wavelength of the characteristic radiation (absorption or fluorescent emission radiation of the analyte), and the mass. The time evolution of the elution of the analytes from the stationary phase is generally analyzed with the help of a computerized system and the result of the analysis is graphically represented in the chromatogram in the form of chromatographic peaks.

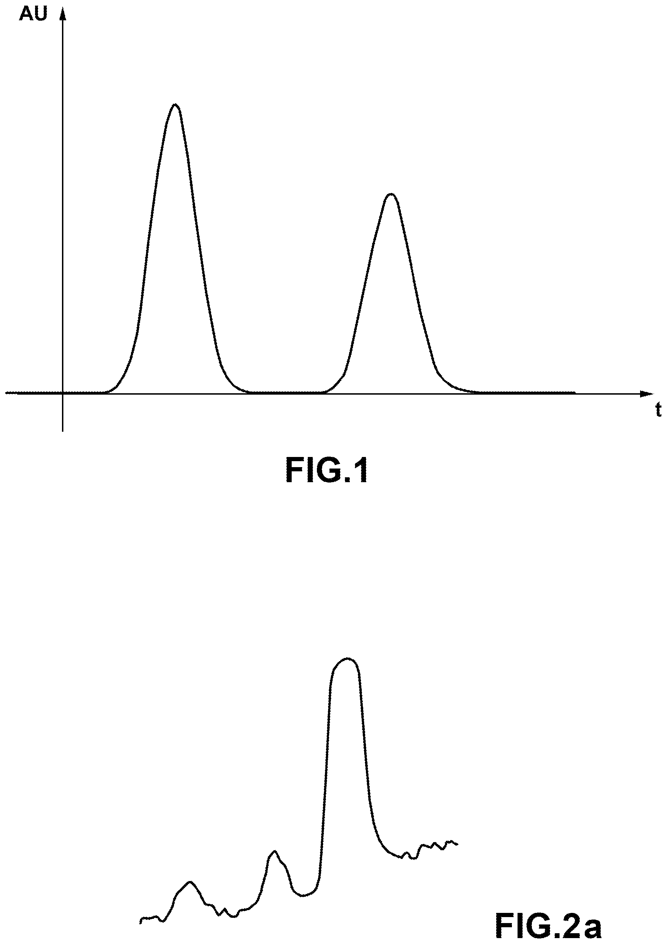

A chromatogram is a complex curve formed by the succession (and in some cases partial superimposition) of curves of chromatographic peaks, as shown in Fig. 1.

According to the current state of the art, once the profile of the chromatographic spectrum has been obtained, computer programs supplied with the chromatographic instrumentation allow an evaluation of the height and the area subtended by the curve (Area Under Curve, AUC) for each of the peaks identified, in a manner dependent or independent of the presence of an operator, and then infer through further mathematical calculations, also performed separately, the concentration values of the analytes.

Typically, known computer programs require the setting of various input parameters that must be defined by an operator; therefore, they require special skills and knowledge on the part of the operator so that an acceptable, hence reliable and reproducible result may be achieved. This means that lack of operator experience may result in non-reproducible data that is inadequate for either monitoring high-throughput industrial processes or for chemical or clinical screening operations as may occur in an analysis laboratory.

Generally, when the components of the analyzed mixture are sufficiently separated from each other, the chromatographic spectra show a well-defined valley-peak-valley profile and individual characteristic peaks for each component, so they may be interpreted and integrated by an operator. In contrast, with complex mixtures, the presence of superimposed chromatographic peaks, which are expressions of analytes with very close retention times, is likely.

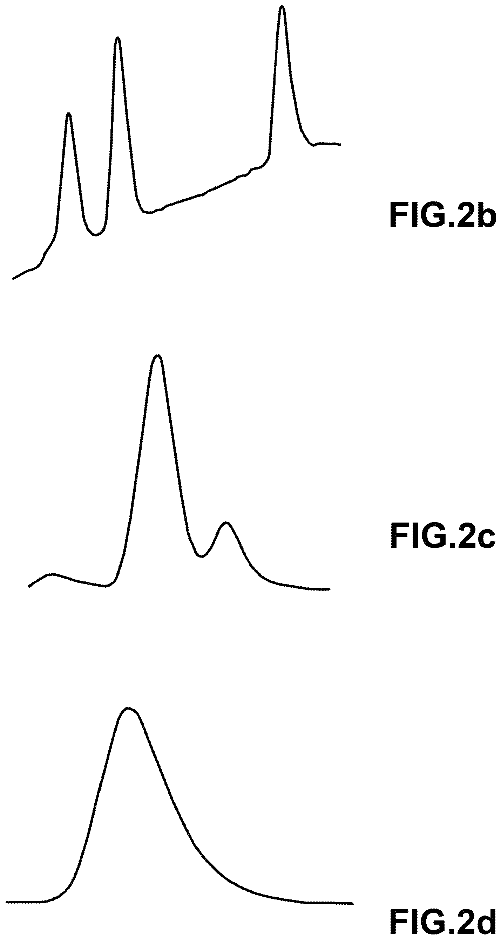

Fig. 2a, 2b, 2c, and 2d show examples of this occurrence, respectively, when a baseline signal with a large background noise is present (Fig. 2a), when a non-horizontal baseline is present (Fig. 2b), when multiple superimposed peaks occur (Fig. 2c), and when an asymmetric peak curve occurs (Fig. 2d).

A baseline signal with a large background noise affects the reproducibility of integration, especially when integration is performed by one operator on each chromatogram, for each peak of interest. A non-horizontal baseline ("rising baseline") affects the reproducibility of the integration of the peak and is of paramount importance in quantitative analysis. Superimposed peaks give rise to integration problems, whereby known resolution and integration methods may be characterized by results that are not always accurate or reproducible. Lastly, an asymmetric peak curve makes it difficult for an operator to identify the end of the curve causing irreproducibility of calculation of the area subtended by the curve from sample to sample and between the sample and internal standard, resulting in lower accuracy and reproducibility of the measurement.

The computer programs currently in use present operational limits in the interpretation of data, namely in the identification of the values of the areas subtended by the curves of the individual peaks when said peaks may not be completely resolved since they are partially superimposed. This problem also occurs when quantitative chromatography analyses (HPLC-UV or HPLC-FLD) are conducted on complex matrices (biopsies, plasma, serum, etc.), and is mainly due to substances interfering with the analyte of interest.

In effect, computer programs associated with chromatography instruments allow the calculation of the area subtended by the peak curves in the case of well-interpretable valley-peak-valley successions and in the case of partially superimposed peak curves only by an operator arbitrarily defining the valley-valley baseline plotting parameters. Furthermore, the separation of superimposed peaks, and the consequent calculation of the area subtended by a peak curve with respect to the peak height, may be obtained by plotting a line perpendicular to the baseline passing through a point on the curve, near the minimum between two superimposed peaks, the line being defined on the basis of criteria chosen by the operator.

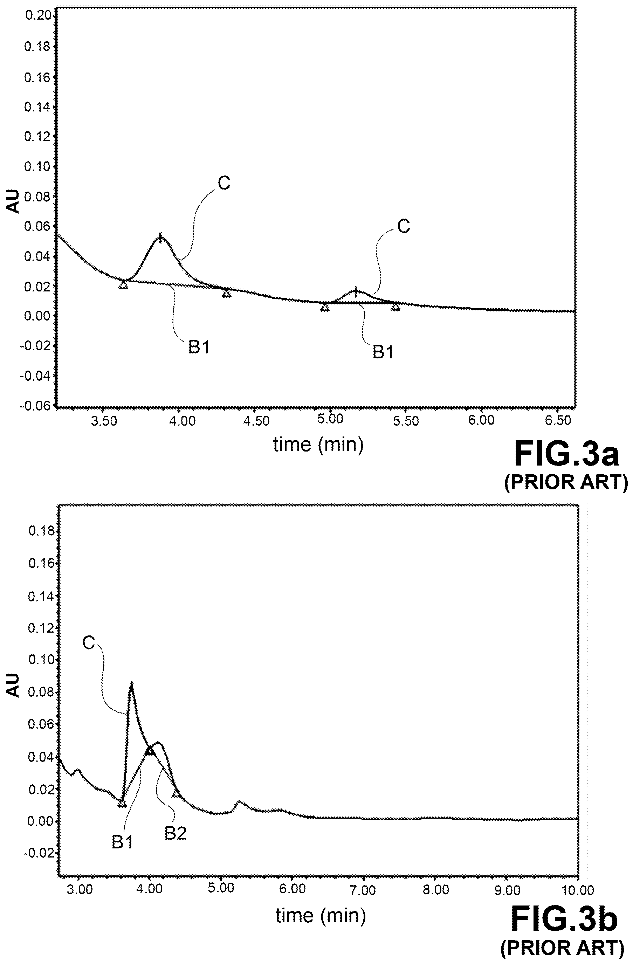

The graphs shown in Fig. 3a and 3b, which define the time (in minutes) on the x-axis and the Absorbance Unit (AU) value on the y-axis, highlight the possibility that the current computer programs supplied with the instrumentation of analysis provide to an operator for calculating the area subtended by a peak curve and/or the peak height, from which the concentration value of the analyte responsible for said peak curve is determined. C denotes the chromatogram curve, B1 and B2 the baselines plotted by an operator. In essence, once an operator is able to plot a baseline that adequately subtends a peak curve of interest, the computer program will provide values of the area subtended by the peak curve and/or the height of the peak curve precisely as a function of the input parameters, including the plotted baseline, provided by the operator. Said parameters will be more easily detected in those chromatograms in which peaks may be easily interpreted and resolved (Fig. 3a) than in chromatograms that exhibit background noise, a non-uniform base signal, and/or partially superimposed peaks (Fig. 3b).

This mode of proceeding is inevitably influenced by the limited nature of the methods available today on the technological platforms used and by operator-dependent variables.

In particular, for a sample measurement to be credible, in addition to being precise, accurate, sensitive, and specific, it must also have characteristics of repeatability and reproducibility. With the software on the market and used to date, the reproducibility of the analysis may depend on the evaluation of data collected by different operators at different times in order to obtain the required analyte concentration value starting from the area subtended by the related curve of its chromatographic peak at retention time "t," which is a value provided by said software.

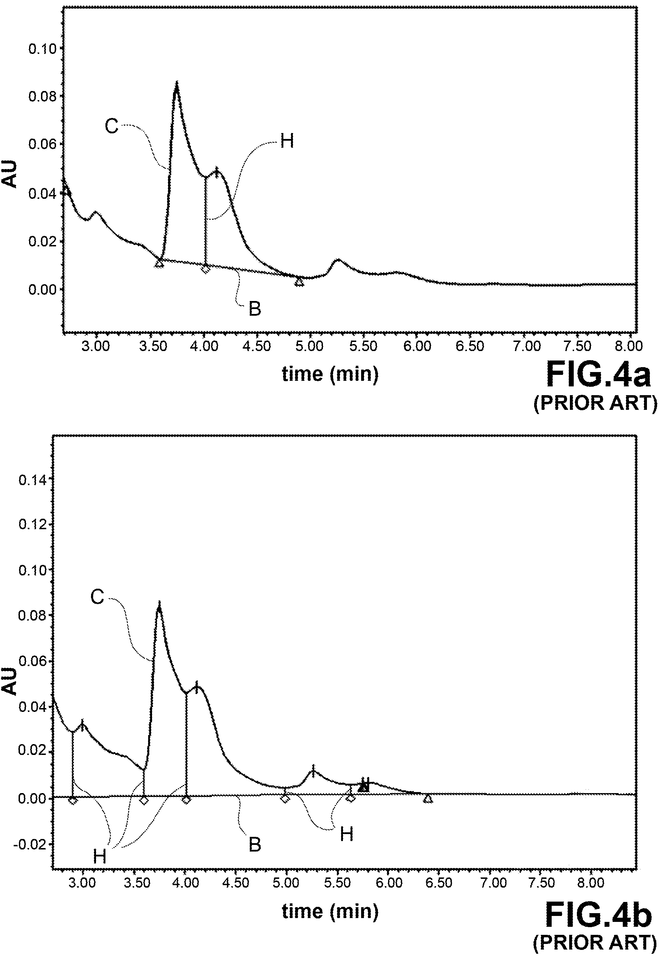

The graphs in Fig. 3b, 4a, and 4b, which represent time (in minutes) on the x-axis and the Absorbance Unit (AU) value on the y-axis, highlight the possibility that the current software supplied with chromatographic analysis instrumentation provides to an operator for calculating the area subtended by a peak curve and/or the peak height, in the case of a spectrogram that is difficult to interpret, with partially superimposed peak curves. C denotes the chromatogram curve, B and H denote the lines plotted by an operator. The available methods are essentially two: the so-called "valley-to-valley" method, already described and shown in Fig. 3b, and the so-called "Baseline and Perpendicular" method, shown in Fig. 4a. In the second case, the operator identifies the two nearest minima to the right and left of the complex peak curve, generated by the superimposition of two neighboring, partially superimposed chromatographic peaks, plots their connecting line B as a base segment, and identifies the minimum of the intermediate valley between the neighboring, partially superimposed peaks. The separating vertical line H is automatically plotted by the software from the arbitrarily identified minimum until it meets the base segment B. The area subtended by each peak curve is approximately considered to be the area between the peak curve, the base segment B, and the separating vertical H. A variant of the "Baseline and Perpendicular" method is shown in Fig. 4b. In this third case, the operator identifies the prevailing baseline B and considers its extension for the entire chromatogram, then identifies the minimum points of each intermediate valley between two neighboring peaks. The separating vertical line H is automatically plotted by the software from each arbitrarily identified minimum until it meets the base segment B, and the area subtended by each peak curve is approximately considered to be the area between the peak curve, the extension of the baseline B, and the separating vertical line H.

Disadvantageously, not only are these gross approximations, but it is important for the same approach to always be taken, even if neither will provide accurate results, when comparing measurements. In addition, when analyzing a measurement or a series of measurements in order to make decisions, as may be the prescription of a different therapeutic regimen for a patient, it is necessary to give adequate weight to all the conditioning variables, and the course of action allowed by current software exponentially increases the measurement uncertainty, leading to the occurrence of operator-dependent errors.

The underestimation or overestimation of the measurement of the value of the area subtended by a peak curve and therefore of the concentration of the analyte that said peak curve represents, if the analyte is a drug, may disadvantageously lead to an incorrect dosage adjustment in a patient under therapeutic monitoring for said drug, or to false positives or false negatives or incorrect measurements in the toxicological field in the identification and measurement of the exposure of an individual to substances of abuse, and, if the analyte is a substance present in a food, to the failure to identify potentially toxic substances and pollutants in food intended for human or veterinary use.

The object of this invention is therefore to provide a satisfactory solution to the problems described above, avoiding the drawbacks of the prior art.

The present invention is defined in the appended claims.

In particular, an object of this invention is to provide a method for automated chromatographic analysis for automatically detecting the location of a chromatographic peak curve and for calculating the area subtended by a chromatographic peak curve, i.e., for automatically determining the retention times and concentration values of a plurality of analytes in a mixture in a chromatographic analysis process, which is reproducible and does not require the indication of initial parameters or other intervention by an operator.

In addition, it is an object of this invention to provide a method for analyzing chromatographic data that is unambiguous and uniform and is capable of making chromatographic peak curves that are difficult to interpret easily quantifiable, for example peak curves in which a clearly evident valley-peak-valley succession is absent due to the presence of superimposed peak curves.

According to this invention, these objects are achieved by a computer-implemented method for determining retention times and concentration values of a plurality of analytes, having the features claimed in claim 1.

Particular embodiments form the subject matter of the dependent claims, the content of which is to be understood as an integral part of this description.

A further subject matter of the invention is a computer system, programmed to implement the method, and a computer program or group of programs executable by the computer system to implement the method.

In summary, this invention is based on the principle of automatically identifying each peak curve of a chromatogram and automatically evaluating the Area Under Curve (AUC) of each peak of the chromatogram, identified at its retention time, through an automatic deconvolution of the peak curve, based on the analysis of the chromatographic curve and determination of the inflection points and tangents to the curve, which makes it possible to avoid variations in the results of the analysis dependent on an integration performed manually on the chromatogram by an operator, as well as to analyze chromatograms that are difficult to interpret, for which a clear and evident valley-peak-valley trend is not graphically recognizable due to the presence of superimposed peaks or a baseline with positive or negative drift, i.e. under non-ideal conditions of distinct peaks and a straight baseline parallel to the x-axis. This makes it possible to quantify a value that would otherwise have been difficult to interpret and determine in an unambiguous and uniform manner.

In a possible embodiment, this invention accomplishes the method by means of a script on a MATLAB® platform (MatLab®, The Math Works Inc, Natick, MA), i.e., a file with a .mat extension built to contain multiple sequential lines of MATLAB® commands and function calls executed in a command window of the MATLAB® environment, adapted to process in an automated manner a predetermined set of collected and digitized measurement data providing as output the value of the area subtended by the peak curve of an analyte of interest, which is expediently executed on a computer arranged to control the chromatographic analysis process. More generally, the method of the invention may be implemented by any computer equipped with a MATLAB® equivalent programming environment appropriate for handling mathematical data processing functions.

Further features and advantages of the invention will be presented in greater detail in the following detailed description of an embodiment thereof, given by way of non-limiting example, with reference to the accompanying drawings, wherein:

Fig. 1 shows a generic representation of a chromatogram;
Fig. 2a-2d show different examples of chromatograms according to the position of the chromatographic peaks;
Fig. 3a and 3b show the outcome of a known method for calculating the area subtended by a peak curve and/or height of the peak, in two examples of a chromatogram curve;
Fig. 4a and 4b show the outcome of an alternative known method of calculating the area subtended by a peak curve and/or the height of the peak, in two examples of chromatogram curves;
Fig. 5 is a block diagram of a chromatographic analysis system according to the invention;
Fig. 6 is a flow diagram of the method that is the subject of the invention as a whole;
Fig. 7-10 are flow diagrams of parts of the method represented by the flow diagram in Fig. 6;
Fig. 11 shows a graph representing the construction of an elemental Gaussian curve subtended by a chromatographic peak curve;
Fig. 12 shows a graph representing the identification of intersection points between a baseline and an elemental Gaussian curve subtended to a chromatographic peak curve;
Fig. 13 is a flow diagram of a further part of the method represented by the flow diagram in Fig. 6; and
Fig. 14, 15a and 15b show graphs of chromatograms with peak curves identified using the method of the invention.

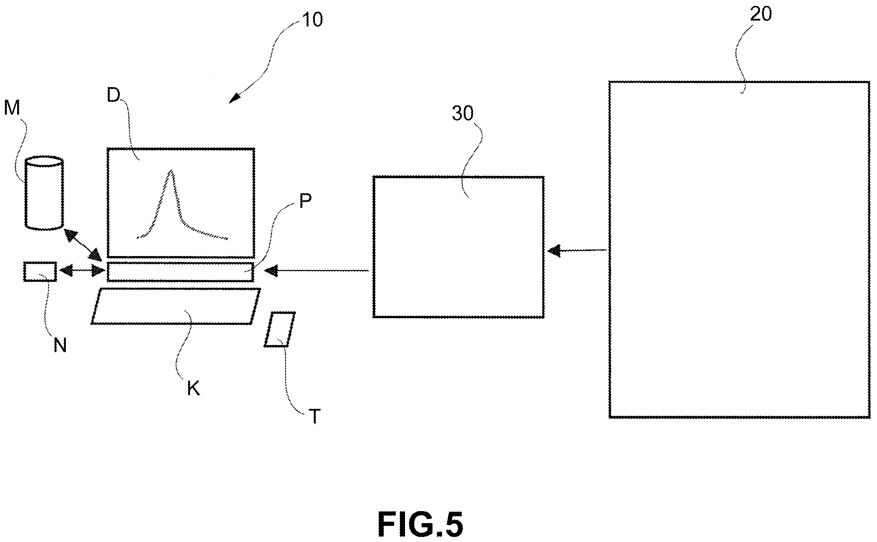

With reference to Fig. 5, a system for chromatographic analysis according to the invention is shown in the essential lines. It comprises a computerized workstation 10, of a known type, arranged to perform a chromatographic analysis process, having a processing subsystem P, a display device D, a keyboard K, a pointing device (mouse) T, a device N for connecting to a communication network, and an associated memory M.

The workstation 10 is arranged to process groups or modules of programs stored in the memory M or accessible over the network, and to display the results on the display D. The program groups or modules are processing and calculation programs that carry out the method according to the invention, as will be described in detail below.

Obviously, the workstation 10 may be arranged to connect to other peripheral input/output devices, local or remote, or may consist of a distributed type of computer system, without changing the features of the invention as these solutions are considered well known in the art and as such will not be further described herein.

The computerized workstation 10 is associated with known chromatographic instrumentation 20, for example-in the case of a high pressure liquid chromatography (HPLC) instrumentation-comprising a mobile phase pickup, a high pressure pump and at least one chromatographic column for separating the analytes, and is in particular coupled to detection means 30 comprising means emitting a light beam to excite a mixture of analytes for ultraviolet or fluorometric detection or means applying an electrical potential to an electrode immersed in solution with respect to a reference electrode for electrochemical detection (electrochemical detector by HPLC), means for detecting the absorbance of the excitation light beam by the analytes or means for detecting a redox potential of the analytes, means for analyzing a detected absorbance or redox potential signal, and analog-to-digital converter means for the absorbance or redox potential signal analyzed, adapted to provide representative data of the trend in time of the intensity of the absorbance signal that constitute the chromatographic or voltammogram spectrum of the mixture of analytes.

The following description of the method for determining retention times and concentration values of a plurality of analytes in a mixture according to the invention is provided in the context of identifying and quantifying analytes of interest by HPLC-UV. Nevertheless, the method described may be applied to any spectrographic profile (such as those derived from detectors of the fluorometric, electrochemical, etc. type), and thus to chromatograms or voltammograms, and various modifications will be readily apparent to persons skilled in the art, who from the general principles deducible will be able to adapt the method to other embodiments.

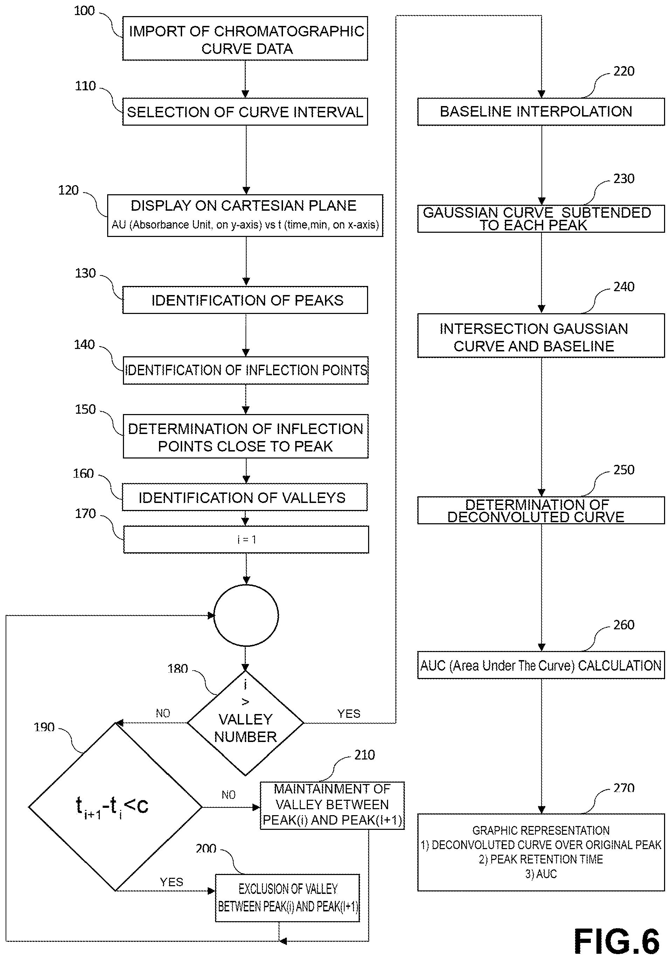

Fig. 6 shows the flow diagram of the method of the invention as a whole.

In an example embodiment of this invention, drugs contained in an organic matrix (plasma) are isolated through the use of chromatography. Any form of liquid chromatography, such as the technique known as High-Pressure/Performance Liquid Chromatography (HPLC), may be employed through chromatographic instrumentation 20. Once isolated, the active drug substances are analyzed by the detection means 30, i.e., exposed to irradiation at a preselected wavelength in the ultraviolet (UV) range, and their respective absorbances are recorded as a function of their retention time, t. Once recorded, these data are supplied to the computer workstation 10, in particular to the processing subsystem P, for processing.

Step 100 shows the step of acquiring chromatographic spectrum data recorded by the software supplied with the HPLC-UV instrumentation and importing it into the MATLAB® processing environment of the processor subsystem P of the workstation 10. The value is a spectrographic profile, which, in the specific example, collects time-dependent changes in absorbance read by absorbance detecting means at a preset wavelength (absorbance or emission wavelength for UV or fluorometric detectors, respectively). Preferably, the signal-to-noise ratio of the signal should be greater than 10 dB and the sampling rate should be chosen to satisfy Nyquist's theorem (i.e., at least twice the maximum frequency of the input signal from which the spectrographic profile or chromatogram is obtained). For example, in the MATLAB® processing environment a raw data file is loaded (file with .arw extension or similar) which is initialized, and the imported value is a matrix composed of two column vectors: the first representing the signal sampling times, expressible on the x-axis of the chromatogram, the second the absorbance values at the respective sampling times, expressible on the y-axis of the chromatogram.

At step 110, the selection of a time window occurs that selectively limits the spectrographic analysis to peaks that are established at predetermined retention times. The choice is arbitrary, defined a priori by the programmer by manually setting the range of elements to be examined for both vectors of the loaded matrix. A graphical control would be appropriate at step 120 by displaying the range of values on an X-Y Cartesian plane showing the Absorbance Unit (AU) on the Y-axis, as a function of time (min.) on the X-axis.

The automatic identification of chromatogram peaks at their respective retention time t follows at step 130, the identification of chromatogram inflection points follows at step 140, the determination of the inflection points closest to the maximum of the peak curve follows at step 150, the identification of chromatogram valleys between two peaks follows at step 160. These steps will be described in detail below.

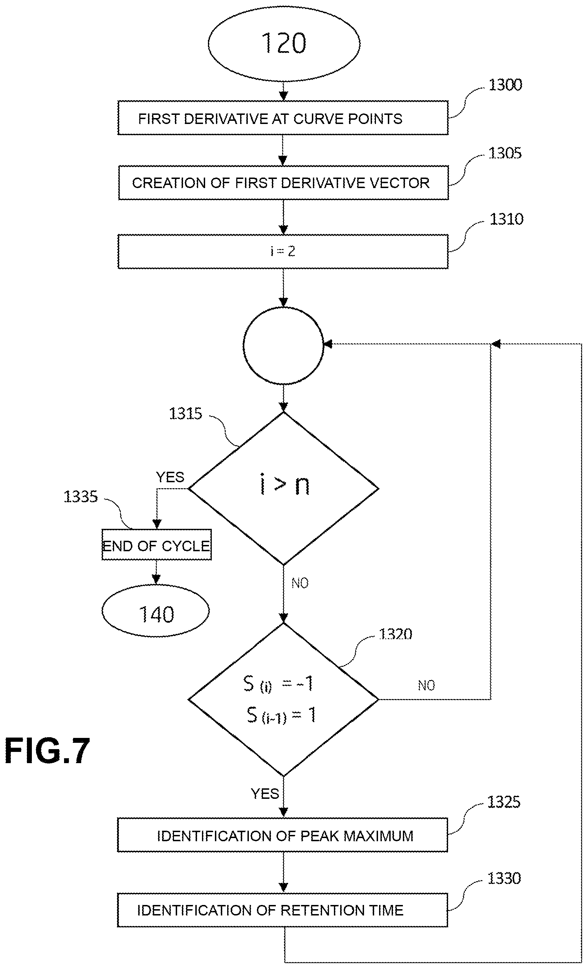

Step 130 is described with reference to the flow diagram in Fig. 7, which schematically represents the logical path of the chromatographic peak detection sub-routine, in which each candidate peak curve is identified and evaluated. First of all, at step 1300 the value of the angular coefficient (m) of the tangent line (first derivative) to the chromatogram curve is determined at each of its points

$$y = m \cdot x \pm q = f'(x) \cdot x \pm q,$$

where f ' (x) = dy/dx.

At step 1305 a vector is created to indicate the local slope of the chromatogram curve, such as a row vector "S" of n elements (one for each tangent value of the interval of points i describing the chromatogram in the context of the arbitrarily preset analysis time window, e.g., 181), all initially set to the value 0 and gradually replaced by the value 1, 0 or -1 by means of an iterative cycle that analyzes point-by-point the sign of the value of the tangent: the assigned value corresponds to 1 if the value of the tangent is greater than zero, to 0 if the value of the tangent is equal to zero, and to -1 if the value of the tangent is negative.

Then, the method involves an iterative process comprising an initialization step 1310 of a counter i, initialized to the value i = 2, and a comparison step 1315 of the value of i with the dimension n of the vector S indicative of the local slope of the chromatogram curve.

For each point i of the chromatogram taken into consideration, at step 1320 it is checked if the tangent value at that point has a negative sign (slope of the curve > 90°) while the tangent value for the previous point has a positive sign (slope of the curve < 90°). If so, the point defined there may be described as the maximum point of the peak curve, and its X-Y coordinates are grouped into a matrix defined by two column vectors (X and Y) in step 1325 along with those of the other maximum points defined similarly in the iteration. The value expressed in the X column (abscissa of the chromatogram) corresponds to the retention time of the peak curve (step 1330).

The cycle ends at step 1335, when i is greater than the number of points of the vector "S," so once all the maximum points of the chromatogram peaks in the selected interval are represented, the algorithm moves on to a subsequent sub-routine dedicated to identifying the inflection points of the analyzed chromatogram curve in the preset time window.

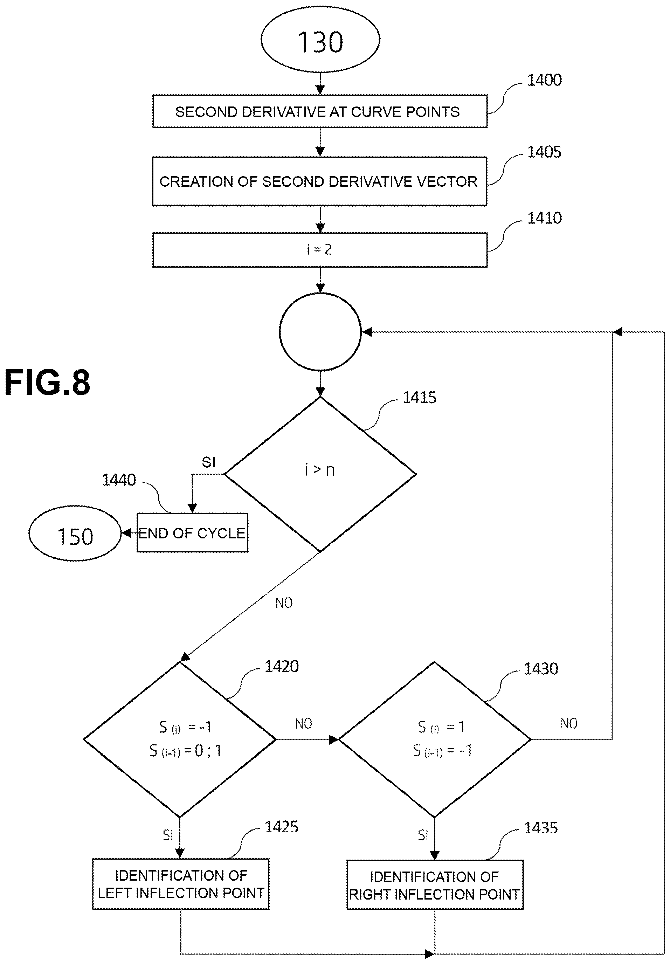

This sub-routine, identified in step 140 of the flow diagram in Fig. 6, is described with reference to the flow diagram in Fig. 8.

While the geometric meaning of the sign of the value of the first derivative of a function (in the case of the invention defined by the set of points of the chromatogram) is an indicator of the evolution of said function (increase/decrease) when defined on the Cartesian plane, the meaning of the sign given to the value of the second derivative (assuming the first derivative is still a derivable function) refers to the concavity of the curve described by the function, upward if the sign is positive, downward if the sign is negative. The point in the function where the sign of the value of the second derivative changes from positive to negative or vice versa is the so-called inflection point.

The method of the invention provides for identifying the inflection points of the chromatogram because they represent moments in time when a peak curve, described by one analyte, could be affected in its construction by the presence of a second interfering analyte, at a very close retention time. In fact, chromatographic peak curves are ideally Gaussian and many actually closely follow an elementary Gaussian shape.

Initially, the procedure depicted in Fig. 8 is similar to the procedure in Fig. 7. In step 1400 the value of the second derivative at the chromatogram curve is determined, at each of its points

$$y = f''(x) = df'(x)/dx$$

In step 1405 a vector indicative of the second derivative of the curve of the chromatogram is created, such as a row vector "S" of n elements (one for each value of the second derivative of the interval of points i describing the chromatogram in the context of the arbitrarily preset analysis time window, for example 181), initially all set to the value 0 and gradually replaced by the value 1, 0, or -1 by means of an iterative cycle that analyzes point-by-point the sign of the value of the second derivative: the assigned value corresponds to 1 if the value of the second derivative is greater than zero, to 0 if the value of the second derivative is equal to zero and to -1 if the value of the second derivative is negative.

Then, the method provides for an iterative process comprising an initialization step 1410 of a counter i, initialized to the value i = 2, and a comparison step 1415 of the value of i with the dimension n of the vector S indicative of the second derivative of the chromatogram curve.

For each point of the chromatogram examined, in step 1420 it is checked whether the value of the second derivative at that point has a negative sign while the second derivative value for the previous point has a positive or zero sign. If so, the point there defined may be described as the left inflection point with respect to the maximum of the peak curve, where the curve changes from being convex to being concave. The X-Y coordinates of the point in the chromatogram for which the above condition has been found are grouped into a matrix defined by two column vectors (X and Y) in step 1425 along with those of the other inflection points defined similarly in the iteration. This is a condition that preferably occurs if there is interference to the left of the analyzable peaks.

If the condition in step 1420 is not found, the alternative hypothesis is checked in step 1430, i.e., if the value of the second derivative at that point has a positive sign while the value of the second derivative for the previous point has a negative sign. In this case, the point defined there may be described as the right inflection point with respect to the maximum of the peak curve, wherein the curve changes from being concave to being convex. The X-Y coordinates of the point in the chromatogram for which the above condition is met are grouped into a matrix defined by two column vectors (X and Y) in step 1435 along with those of the other similarly defined inflection points in the iteration. This is a condition that reasonably occurs if there is interference to the right of the analyzable peaks, in the decreasing portion, if any interference occurs in the absorbance reading of the analyte examined at its retention time t.

When the second alternative is also excluded, the cycle proceeds iteratively and, once all the points of the chromatogram have been examined, the cycle ends at step 1440, when i is greater than the number of points of the vector "S," whereby, when all the inflection points of the peaks of the chromatogram in the selected interval are represented, the algorithm passes to a subsequent sub-routine (150) dedicated to the identification-among the left and right inflection points found-of the two points closest to the maximum point for each peak curve under examination of the analyzed chromatogram curve.

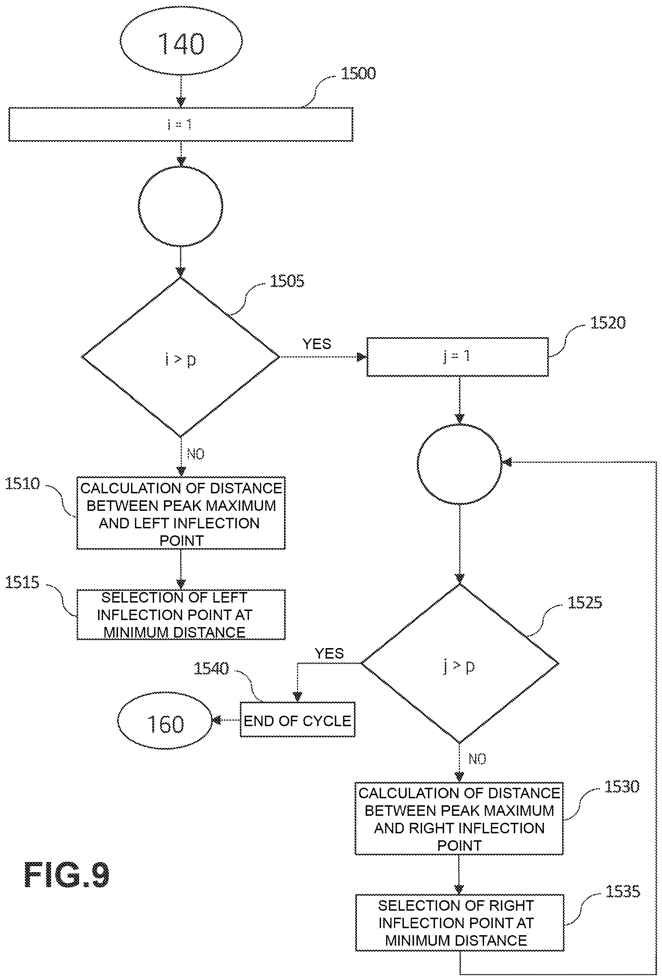

Step 150 is described with reference to the flow diagram in Fig. 9. It shows the sub-routine that, starting from the coordinates of all the inflection points to the left and to the right of the detected peaks, and from the corresponding data set of X, Y coordinates for these points, identifies, among them, the inflection points - right and left - closest to the maximum point for each peak curve examined.

The sub-routine comprises two consequential iterative loops.

The first cycle comprises at step 1500 an initialization phase of a counter i = 1, and for each cycle in which the counter i does not exceed the previously identified number p of peaks (check at step 1505), at step 1510 the distances between the maximum point of the i-th peak curve and each selected inflection point to the left of it are calculated.

In the next step 1515, the left inflection point located at the shortest distance from the maximum point of the peak curve under consideration (as usual, described by its X, Y coordinates) is selected.

After the first cycle has ended when i is greater than the number p of peaks, the second cycle takes place which comprises at step 1520 an initialization phase of a counter j = 1, and for each cycle in which the counter j does not exceed the number p of peaks identified previously (check at step 1525), at step 1530 the distances between the maximum point of that j-th peak curve and each selected inflection point to the right thereof are calculated.

In the next step 1535, the right inflection point located at the shortest distance from the maximum point of the peak curve under consideration (as usual, described by its X, Y coordinates) is selected.

Lastly, having saved the X, Y coordinates of the inflection points - left and right - identified by the sub-routine, the cycle ends at step 1540, when j is greater than the number p of peaks, and the algorithm moves on to the next sub-routine (160) dedicated to the identification of the baseline.

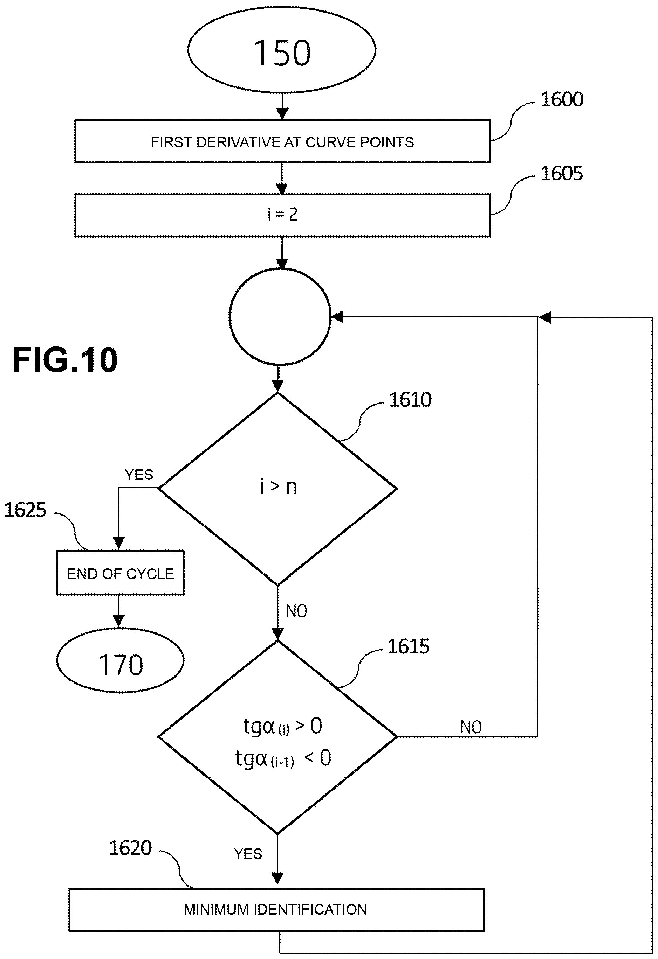

Step 160 is described with reference to the flow diagrams in Fig. 6 and 10.

The peak detection method of the invention takes its cue from the concept that a spectroscopic signal (such as a chromatogram obtained as a function of time) consists of said signal and an underlying baseline. If the baseline is correctly subtracted, what is left is the signal to be analyzed, which is made more suitable for evaluating peaks.

The method according to the invention allows its automatic construction in a completely operator-independent manner by performing a linear interpolation of the minimum points of the analyzed chromatogram curve.

The first step 1600 consists of acquiring the angular coefficient values (m) of the tangent line (first derivative) to the chromatogram curve, at each of its points, and then entering them into an iterative cycle for the evaluation of the sign that consists of an initialization step 1605 of a counter i, initialized at a value i = 2, a comparison step 1610 of the value of i with the dimension n of the vector S indicative of the first derivative of the chromatogram curve, a comparison step 1615 between the tangent values of consecutive points of the chromatogram, and a final signaling step 1620.

More specifically, for each point in the chromatogram under consideration, at step 1615 the value of the first derivative at said point is compared to the value of the first derivative at the previous point. If the value of first derivative at the point is greater than 0 and the value of first derivative at the preceding point is less than 0, then the point is identified as a minimum point and its Cartesian coordinates are added to a matrix defined by two column vectors (X and Y) in step 1620.

The cycle ends at step 1625, when i is greater than the number of points in the vector S.

At step 170 et seq. of Fig. 6, an iterative cycle (steps 170 - 220) is executed that allows for refinement in plotting the baseline. In effect, in the case of complex spectra, the invention allows not a simple valley-to-valley baseline to be plotted, but rather the minimum points to be considered for the interpolation of the line to be chosen, avoiding the consideration of the valleys between (partially) superimposed peaks.

The algorithm provides for excluding these minimum points ("valleys") so that, in the context of an iterative cycle 180, where i represents the index of minimum points and is compared with a dimension m indicative of the amount of minimum points detected, for each valley analyzed, if the difference between the retention time of the peak curve that follows it and the retention time of the peak curve that precedes it is less than a predetermined cut-off value c (in the specific case < 0.4 s) (step 190), then the condition exists to exclude that unwanted valley (step 200) and its coordinates will be added to another matrix, defined by the column vectors (X and Y) of which it is composed, along with the other valleys similarly excluded. Otherwise, at step 210 the valley is maintained. After having subtracted the coordinates of the excluded valley matrix elements from the set of coordinates of all previously identified minimum points (according to the flow diagram in Fig. 10, described above), a linear interpolation model is used to plot the baseline between the X-Y coordinates of the valleys retained (step 220).

More precisely, given a set of points described by X-Y coordinates, when desiring to find the unknown value Y*, it is possible to estimate the value of this variable within a given range of known coordinates "X" through linear interpolation. Thus, once this interval is defined, the interpolation function may be provided by the MATLAB® programming language (F = griddedInterpolant(X, Y), where X and Y express the X-Y coordinates of the maintained valleys), to build the baseline underlying the spectrum.

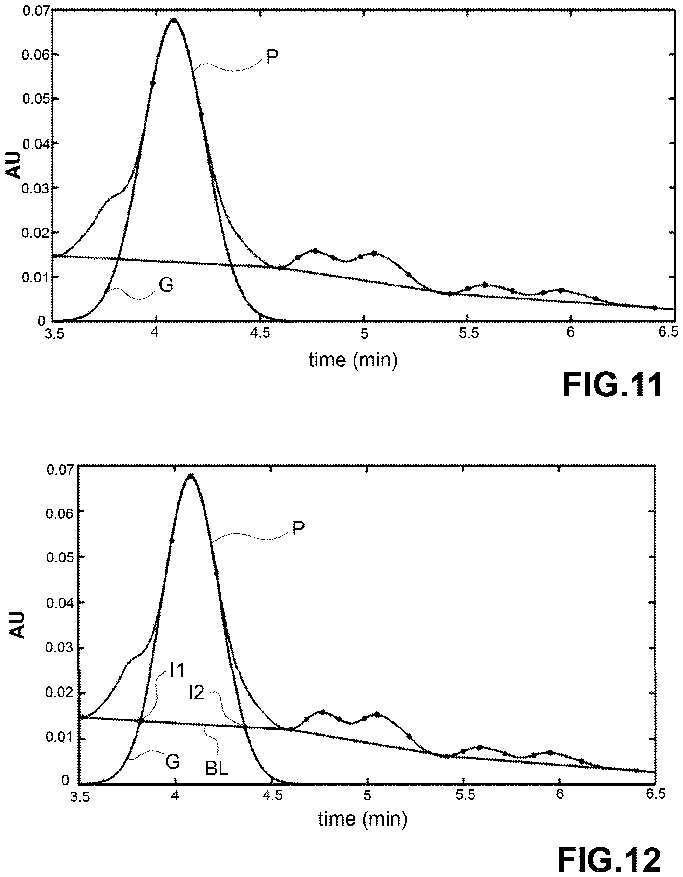

Since the chromatographic peaks are ideally Gaussian and many in fact closely follow an elementary Gaussian shape, the embodiment of the invention also proposes to identify said Gaussian curve underlying each chromatographic peak curve by identifying the maximum point and the right and left inflection points, for example by exploiting the interpolation facility provided by the MATLAB® programming language (Gauss3 = fit(X,Y, 'gauss3'), where X and Y express the X-Y coordinates of the peak curve from the left inflection point to the right inflection point, passing through the maximum point, and from which the Gauss curve is to be extrapolated (step 230). Fig. 11 shows a graph, defining the time (in minutes) on the x-axis and the absorbance value (Absorbance Unit, AU) on the y-axis, which represents the construction of the elementary Gaussian curve G subtended to the first chromatographic peak curve P, having as reference points for extrapolation those of the chromatogram itself, from the left inflection point to the right inflection point, passing through the maximum point of the peak curve. Said construction is iterated for all detected peaks.

Said construction is of fundamental importance in the determination of the deconvoluted curve. The method (and program) of the invention is designed to deconvolute chromatographic peaks, regardless of the number of said peaks, while also allowing an estimation of (partially) superimposed spectral components and their concentrations in the analyzed biological matrix.

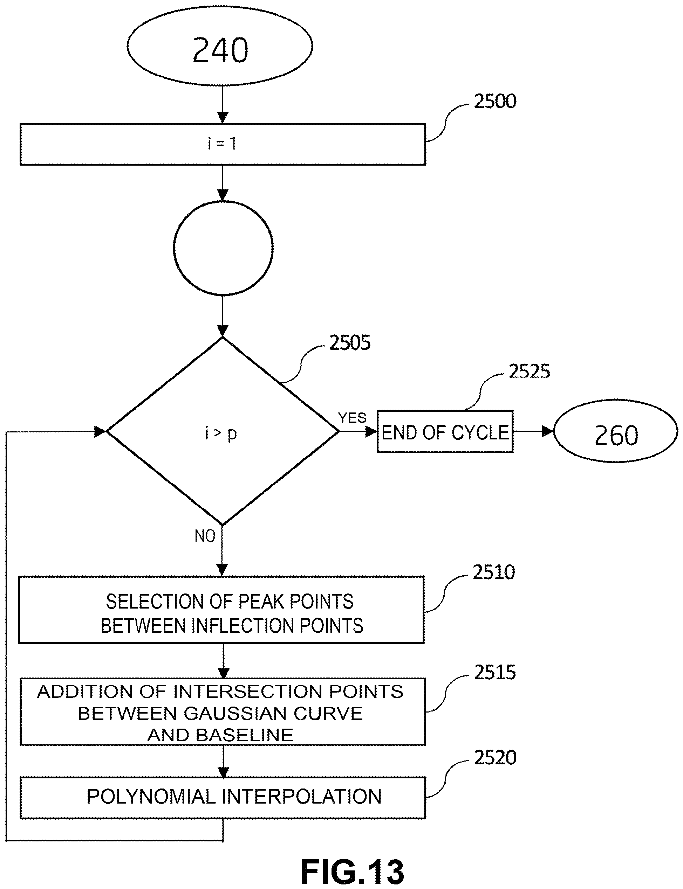

However, before arriving at this step, indicated with 250 in Fig. 6 and which will be described in detail with reference to the flow diagram in Fig. 13, another prior step is preferable for the identification of the deconvoluted curve, namely finding the intersection of the described elementary Gaussian curve with the baseline (step 240). Fig. 12 is a graph, defining the time (in minutes) on the x-axis and the absorbance value (Absorbance Unit, AU) on the y-axis, representing the identification of the intersection points I1 and I2 between the baseline BL and the elementary Gaussian curve G subtended to the first chromatographic peak curve P, constructed by having as reference points for extrapolation the points of said chromatogram from the left inflection point to the right inflection point, passing through the maximum point of the peak curve. Said construction is iterated for all detected peaks.

A representative flow diagram of step 250 is shown in Fig. 13.

Having acquired all the elementary data in the previous steps, a further iterative cycle is implemented consisting of an initialization step 2500 of a counter i, initialized at the value i = 1, a comparison step 2505 of the value of i with the number p of identified chromatogram peaks, and a succession of interpolation steps 2510-2520.

More specifically, in step 2510, for each chromatographic peak curve, it is requested to select every point to the left and right of the maximum point of the peak curve up to the inflection points - left and right - selected previously and in step 2515 also the intersection points between the built Gaussian curve describing the peak curve and the baseline, obtained by execution of the previously described instructions, are to be added to the set of selected points.

Then, given the X-Y coordinates of the points thus selected, at step 2520 the deconvoluted curve for that peak curve is constructed as an expression of a third degree Hermitian polynomial interpolation model, between the selected points. Advantageously, Hermitian interpolation extends polynomial interpolation by considering as data not only the points of the function, but also the derivative data of said function in order to better reconstruct its behavior.

The cycle ends at step 2525, when i is greater than the number of identified peaks.

Finally, referring back to the flow diagram in Fig. 6, the last two steps of the method according to the invention comprise calculating (260) and - optionally - graphically representing (270) the parameters of the identified peaks, including: retention time, AUC, and, optionally, height relative to baseline. Obviously, other embodiments of the invention would allow other information related to the analyzed chromatogram (in general, to the spectrogram) to be provided as output, such as, for example, the peak with the highest intensity, the position of the point of maximum absolute intensity, as well as the quality of the proposed result (which takes into account the statistical confidence derived from the comparison of the results obtained with the method described herein with respect to the one proposed by the software provided with the chromatographic instrumentation, having a known database).

Then, having obtained the deconvoluted curve underlying the peak curve according to the method of the invention, the AUC is calculated as the difference between the integral of the deconvoluted Gaussian defined in the interval $X_0 \div X_n$ (where $X_0$ and $X_n$ represent the abscissa value describing the point of origin of the Gaussian on the baseline and the abscissa value defining its end, respectively) and the integral of the function expressing the baseline, defined in the interval:

$$\text{AUC} = \int_{X0}^{Xn} deconvoluted\ curve - \int_{X0}^{Xn} baseline$$

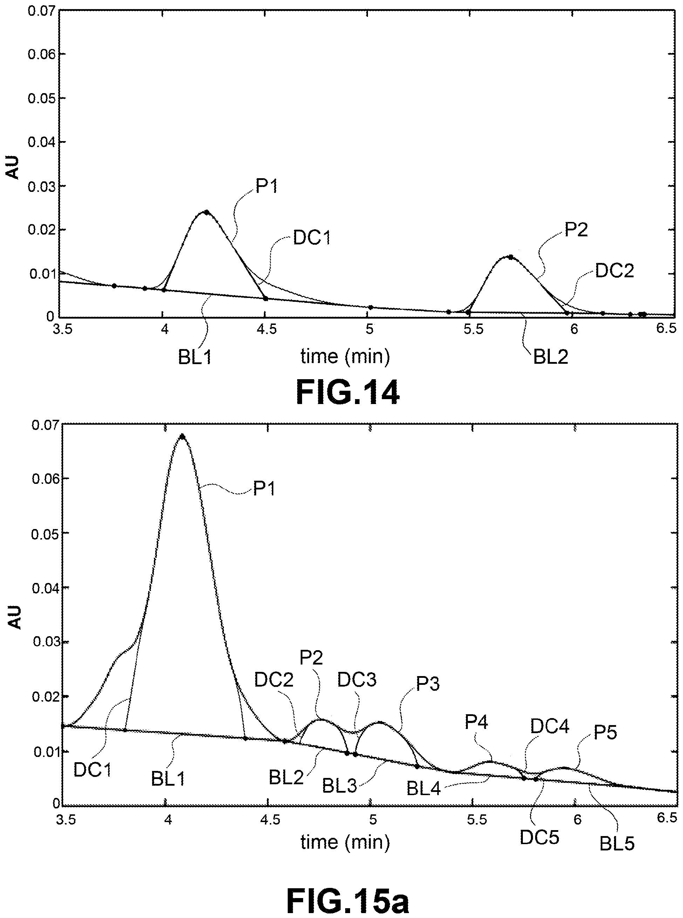

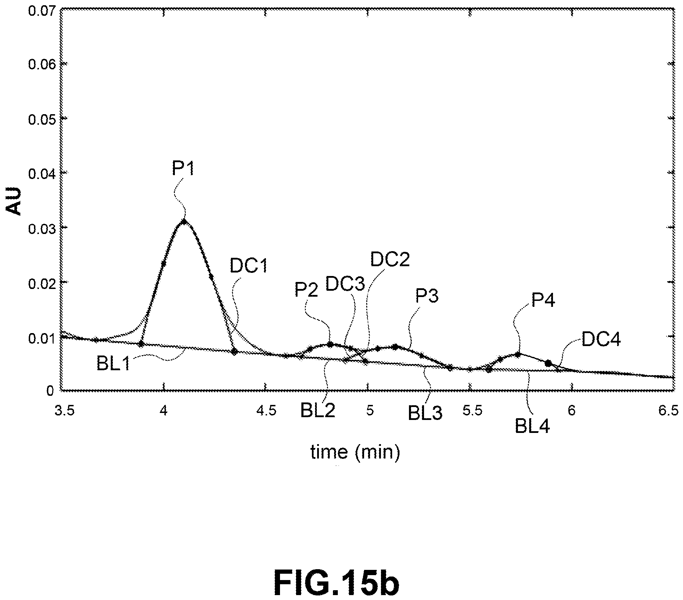

The result is shown graphically, such as in Fig. 14 and 15, providing as output graphical and numerical information of the original and deconvoluted chromatographic peaks, the AUC value for the detected peaks, and the relative retention times.

Fig. 14 shows a chromatogram showing the time (in minutes) on the x-axis and the absorbance value (Absorbance Unit, AU) on the y-axis, and shows two isolated peak curves P1 and P2, specifically the result of a quantitative analysis HPLC-UV performed in a human plasma sample containing daptomycin and gentamicin. Peak curves are readily identifiable both by an operator, through software currently included with the instrumentation, and by the automated method of the invention. The latter is able to plot a baseline BL1, respectively BL2 in an automatic, precise, and accurate manner, so that timely, reproducible, and calculable AUC values may be obtained. In addition, it allows the measurement of the AUC value as an expression of the integration of the area under the deconvoluted curve DC1, respectively DC2 subtended to the peak curve and the automatically defined baseline.

Fig. 15a and 15b show two graphs of complex chromatograms. The time (in minutes) is defined on the x-axis and the absorbance value (Absorbance Unit AU) is defined on the y-axis. These graphs highlight how the method of the invention works on the chromatographic spectrum in the arbitrarily preset detection time window. After automatically identifying the peak curves P1-P5 of the spectrum and accurately plotting the baseline BL1-BL5, the method also provides for constructing a deconvoluted curve DC1-DC5 for each peak curve, and then calculating the AUC and consequently the concentration of the corresponding analyte. Deconvolution of the concentration/time profile allows, in case of partial superimposition of the peak curves, for the interference of one peak curve with respect to the other to be eluded in the calculation of AUC. The construction of the deconvoluted curve of the peak curve varies as a function of the elementary Gaussian that defines said peak curve within the inflection points: in the case of superimposed peak curves, if the increase and decrease slopes of the subtended elementary Gaussians are particularly evident, the deconvoluted curves of the peak curve they define will be more likely to intersect below the baseline (Fig. 15a), otherwise, they will be more likely to intersect above (Fig. 15b).

As the method has been described, all maximum points of the function define a peak, and the AUC of the peak curve may be calculated. However, the method allows for a threshold AUC value (e.g., 2% of the maximum measured AUC value) to be set, below which AUC values (and thus corresponding peaks) are not taken into account.

It should be noted that the proposed embodiment of this invention in the foregoing discussion is merely by way of example and not limiting of this invention. A person skilled in the art will easily be able to implement this invention in different embodiments which do not however depart from the principles set forth herein and are therefore encompassed in this patent.

This is particularly true with regard to the possibility of following different orders in the procedure through the steps of the method indicated by the flow diagram in Fig. 6, where applicable, so changing the order of execution of the sub-routines does not change the result.

Lastly, the invention also has as its subject a computer program, in particular a computer program on or in an information carrier or memory, adapted to implement the invention. This program may use any programming language, and be in the form of source code, object code, or intermediate code between source code and object code, such as in a partially compiled form, or in any other form desired to implement the method according to the invention.

The information carrier may be any entity or device capable of storing the program. For example, the carrier may comprise a storage means, such as a ROM memory or a RAM memory, or a magnetic or optical recording means, such as a hard disk or a CD-ROM or DVD-ROM.

On the other hand, the information carrier may be a carrier that may be transmitted, such as an electrical or optical signal, which may be routed through an electrical or optical cable, through radio signals, or through other means. In particular, the program according to the invention may be downloaded locally from the Internet or similar network or executed remotely by transmitting the data to be processed and the processed data over the Internet or similar network.

The program may be associated with current chromatographic software, sold with the instrumentation, to enhance the potential of the whole equipment, as well as with any chromatographic kits, in association with specific settings of program variables suitable for the implementation of a predetermined chromatographic method, characterized by specific peaks, specific AUCs, and specific retention times.

Advantageously, as demonstrated in the foregoing discussion, the invention enables automation of the process of evaluating chromatographic measurements, and increased accuracy, reproducibility, and repeatability of chromatographic analysis, and the related data may be analyzed in an unambiguous and uniform manner. Furthermore, thanks to the method of the invention, chromatographic peaks that are difficult to interpret, in which a clearly evident valley-peak-valley succession is absent due to superimposed peaks, may be made easily quantifiable. The invention enables interpretation and integration of superimposed peaks at the same level as well-defined peaks. This allows an automated construction and subsequent integration of the areas subtended by the peak curves, making quantifiable a value that is otherwise difficult to determine unequivocally without any operator-dependent variable.

The invention finds application in various fields, including the therapeutic monitoring of drugs and substances of abuse, environmental analysis and monitoring, residual toxicological analysis on food of various kinds (silage, animal and vegetable origin, fruit and vegetables, etc.).

The invention allows, inter alia, for the resolution of the problem of interferents, such as endogenous interferents or other drugs in poly-treated patients, or the resolution of the matrix effect given by the analyzed samples, lowering the limits of determination and quantification (LOD and LOQ) of analytical techniques and allowing a much more accurate and precise analysis of residues, traces, or levels of drug in a given matrix.

Moreover, the application of the invention allows for the HPLC chromatography technique (with UV, FLD, or electrochemical detection) to be further developed, allowing its reproducibility to be improved and its sensitivity increased, bringing it closer to that of the reference technique (Gold Standard) which is Mass Spectrometry (LC-MS), which, however, is characterized by higher costs of analysis and instrumentation.

Although the invention has been described with reference to the application to a high pressure liquid chromatography analysis process, it is also applicable in chromatographic analyses of other kinds. In addition, it could also be applied to other analyses or methods, for example DNA sequencing, where an output diagram is given for analysis that has a peak or peaks with a "valley-peak-valley" pattern.

Of course, without prejudice to the principle of the invention, the embodiments and the details of execution may vary widely with respect to that which has been described and illustrated purely by way of non-limiting example, without thereby departing from the scope of protection of the invention defined by the appended claims.

## Claims

1. A computer-implemented method for determining the retention times and concentration values of a plurality of analytes in a mixture in a chromatographic analysis process based on the elution of the analytes of said mixture from a predetermined stationary retention phase to a predetermined eluent mobile phase, comprising:

   a. acquiring a plurality of data representative of a chromatogram or voltammogram that correlates an absorbance response at at least one excitation radiation having a predetermined wavelength, or a redox potential response, by each analyte of the mixture, in proportion to its quantity in the mobile phase following elution, to the respective retention time by said predetermined stationary phase, the chromatogram or voltammogram comprising a series of peak curves representative of the absorbance or redox potential signals of the respective analytes at different retention times, the area subtended by the peak curve being a function of the concentration of said analytes in the mobile phase following elution;
   b. determining the retention time of respective analytes through the determination of a plurality of maximum points of said chromatogram or voltammogram, each associated with a respective peak curve, and the distance of the abscissa value of said maximum points with respect to a predetermined origin of said chromatogram or voltammogram;
   c. determining the inflection points of each peak curve associated with a determined maximum point;
   d. determining respective Gaussian interpolation curves of each portion of the peak curve comprised between the inflection points of each respective peak curve;
   e. determining a baseline of said chromatogram or voltammogram;
   f. determining the points of intersection of each Gaussian interpolation curve and the baseline;
   g. determining a deconvolution curve of each peak curve by interpolation of the points of the peak curve included between the respective inflection points and of the points of intersection of the respective Gaussian interpolation curve with the baseline; and
   h. determining a concentration value of each analyte as the difference between the area subtended by the deconvolution curve and the area subtended by the baseline, included between the time values corresponding to the intersection points of the respective Gaussian interpolation curve and the baseline.

2. The method according to claim 1, further comprising:
   i. representing on a Cartesian graph each peak curve and the respective deconvolution curve, the distance of the abscissa value of the maximum points of said peak curves with respect to a predetermined origin in the time dimension, and the value of the concentration of each analyte.

3. The method according to claim 1 or 2, wherein determining the inflection points of said peak curve comprises identifying a pair of inflection points closest to the maximum point of said peak curve, respectively a first inflection point preceding said maximum point of the peak curve and a second inflection point subsequent to said maximum point of the peak curve.

4. The method according to any of the preceding claims, wherein determining a baseline comprises a linear interpolation of a predetermined set of minimum points of the chromatogram or voltammogram.

5. The method according to claim 4, wherein said predetermined set of minimum points of the chromatogram or voltammogram does not include minimum points comprised between two maximum points, the difference in elution time of which is less than a predetermined value of an exclusion threshold.

6. The method according to any of the preceding claims, wherein determining the deconvolution curve of each peak curve comprises a Hermitian third degree polynomial interpolation of the points of the peak curve between the respective inflection points and the intersection points of the respective Gaussian interpolation curve with the baseline.

7. The method according to any of the preceding claims, comprising comparing the determined concentration value of an analyte with a minimum threshold concentration value and excluding said determined concentration value if it is lower than said minimum threshold concentration value.

8. The method according to any of the preceding claims, comprising selecting a time interval of said chromatogram or voltammogram.

9. A computer system included in a chromatographic analysis system comprising an absorbance detector, said computer system being programmed to implement a method for determining the retention times and concentration values of a plurality of analytes in a mixture in a chromatographic or voltametric analysis process, according to any of claims 1 to 8.

10. A computer program or group of programs executable by a computer system included in a chromatographic analysis system comprising an absorbance detector, said computer program or group of programs comprising one or more code modules for implementing a method for determining the retention times and concentration values of a plurality of analytes in a mixture in a chromatographic analysis process, according to any of claims 1 to 8.

**Patentansprüche**

1. Computerimplementierte Methode zur Bestimmung der Retentionszeiten und Konzentrationswerte einer Vielzahl von Analyten in einer Mischung in einem chromatographischen Analyseverfahren, das auf der Elution der Analyten dieser Mischung von einer vorbestimmten stationären Retentionsphase zu einer vorbestimmten mobilen Elutionsphase basiert und folgendes umfasst:

a. Erfassen einer Vielzahl von Daten, die ein Chromatogramm oder Voltammogramm repräsentieren, das eine Absorptionsreaktion bei mindestens einer Anregungsstrahlung aufweisend eine vorbestimmte Wellenlänge oder eine Redoxpotenzial-Reaktion durch jeden Analyten der Mischung im Verhältnis zu seiner Menge in der mobilen Phase nach der Elution mit der jeweiligen Retentionszeit in der vorbestimmten stationären Phase korreliert, wobei das Chromatogramm oder Voltammogramm eine Reihe von Spitzenkurven umfasst, die die Absorptions- oder Redox-Potenzialsignale der jeweiligen Analyten bei verschiedenen Retentionszeiten repräsentieren, wobei die Fläche, die von der Spitzenkurve begrenzt wird, von der Konzentration der Analyten in der mobilen Phase nach der Elution abhängt;
b. Bestimmen der Retentionszeit der jeweiligen Analyten durch die Bestimmung einer Vielzahl von Maximalpunkten des Chromatogramms oder Voltammogramms, die jeweils einer entsprechenden Spitzenkurve zugeordnet sind, und des Abstands des Abszissenwertes der Maximalpunkte in Bezug auf einen vorbestimmten Ursprung des Chromatogramms oder Voltammogramms;
c. Bestimmen der Durchbiegungspunkte jeder Spitzenkurve, die einem bestimmten Maximalpunkt zugeordnet ist;
d. Bestimmen der jeweiligen gaußschen Interpolationskurven jedes Abschnitts der Spitzenkurve, der zwischen den Durchbiegungspunkten jeder jeweiligen Spitzenkurve liegt;
e. Bestimmen einer Basislinie des Chromatogramms oder Voltammogramms;
f. Bestimmen der Schnittpunkte jeder gaußschen Interpolationskurve und der Basislinie;
g. Bestimmen einer Entfaltungskurve jeder Spitzenkurve durch Interpolation der Punkte der Spitzenkurve, die zwischen den jeweiligen Durchbiegungspunkten und den Schnittpunkten der jeweiligen gaußschen Interpolationskurve mit der Basislinie enthalten sind; und
h. Bestimmen eines Konzentrationswertes jedes Analyten als die Differenz zwischen der Fläche, die von der Entfaltungskurve begrenzt wird und der Fläche, die von der Basislinie begrenzt wird, die zwischen den Zeitwerten, die den Schnittpunkten der jeweiligen gaußschen Interpolationskurve und der Basislinie entsprechen, enthalten ist.

2. Methode nach Anspruch 1, ferner umfassend:
i. Darstellen in einem kartesischen Diagramm jeder Spitzenkurve und der jeweiligen Entfaltungskurve, des Abstands des Abszissenwertes der Maximalpunkte der Spitzenkurven in Bezug auf einen vorbestimmten Ursprung in der Zeitdimension und des Konzentrationswertes jedes Analyten.

3. Methode nach Anspruch 1 oder 2, wobei das Bestimmen der Durchbiegungspunkte der Spitzenkurve das Identifizieren eines Paars von Durchbiegungspunkten umfasst, die dem Maximalpunkt der Spitzenkurve am nächsten sind, bzw. eines ersten Durchbiegungspunkts vor dem Maximalpunkt der Spitzenkurve und eines zweiten Durchbiegungspunkts nach dem Maximalpunkt der Spitzenkurve.

4. Methode nach einem der vorangehenden Ansprüche, wobei das Bestimmen einer Basislinie eine lineare Interpolation eines vorbestimmten Satzes von Minimalpunkten des Chromatogramms oder Voltammogramms umfasst.

5. Methode nach Anspruch 4, wobei der vorbestimmte Satz von Minimalpunkten des Chromatogramms oder Voltammogramms keine Minimalpunkte umfasst, die zwischen zwei Maximalpunkten enthalten sind, wobei der Unterschied in der Elutionszeit geringer als ein vorbestimmter Trennungsschwellenwert ist.

6. Methode nach einem der vorangehenden Ansprüche, wobei das Bestimmen der Entfaltungskurve jeder Spitzenkurve eine Hermite-Polynominterpolation dritten Grades der Punkte der Spitzenkurve zwischen den jeweiligen Durchbiegungspunkten und den Schnittpunkten der jeweiligen gaußschen Interpolationskurve mit der Basislinie umfasst.

7. Methode nach einem der vorangehenden Ansprüche, umfassend das Vergleichen des bestimmten Konzentrationswertes eines Analyten mit einem minimalen Schwellenkonzentrationswert und das Trennen des bestimmten Konzentrationswertes, wenn er niedriger als der minimale Schwellenkonzentrationswert ist.

8. Methode nach einem der vorangehenden Ansprüche, umfassend das Auswählen eines Zeitbereiches des Chromatogramms oder Voltammogramms.

9. Computersystem, das in einem chromatographischen Analysesystem enthalten ist und einen Absorptionsdetektor umfasst, wobei das Computersystem programmiert wird, um eine Methode zur Bestimmung der Retentionszeiten und der Konzentrationswerte einer Vielzahl von Analyten in einer Mischung in einem chromatographischen oder voltammetrischen Analyseverfahren gemäß einem der Ansprüche 1 bis 8 durchzuführen.

10. Computerprogramm oder Gruppe von Programmen, die durch ein Computersystem, das in einem chromatographischen Analysesystem umfassend einen Absorptionsdetektor enthalten ist, durchführbar ist, wobei das Computerprogramm oder die Gruppe von Programmen ein oder mehrere Codemodule zur Implementierung einer Methode zur Bestimmung der Retentionszeiten und der Konzentrationswerte einer Vielzahl von Analyten in einer Mischung in einem chromatographischen Analyseverfahren gemäß einem der Ansprüche 1 bis 8 umfassen.

**Revendications**

1. Un procédé informatique pour la détermination des temps de rétention et des valeurs de concentration d'une pluralité d'analytes dans un mélange dans un processus d'analyse chromatographique basé sur l'élution des analytes dudit mélange depuis une phase stationnaire de rétention prédéterminée vers une phase mobile d'éluant prédéterminée, comprenant:

a. l'acquisition d'une pluralité de données représentatives d'un chromatogramme ou voltammogramme qui corrèle une réponse d'absorbance à au moins un rayonnement d'excitation ayant une longueur d'onde prédéterminée, ou une réponse de potentiel redox, par chaque analyte du mélange, en proportion de sa quantité dans la phase mobile après élution, avec le temps de rétention respectif par ladite phase stationnaire prédéterminée, le chromatogramme ou voltammogramme comprenant une série de courbes de pic représentatives des signaux d'absorbance ou de potentiel redox des analytes respectifs à différents temps de rétention, l'aire sous-tendue par la courbe de pic étant une fonction de la concentration desdits analytes dans la phase mobile après élution;

b. la détermination du temps de rétention des analytes respectifs par la détermination d'une pluralité de points maximums dudit chromatogramme ou voltammogramme, chacun associé à une courbe de pic respective, et la distance de la valeur de l'abscisse desdits points maximums par rapport à une origine prédéterminée dudit chromatogramme ou voltammogramme;

c. la détermination des points d'inflexion de chaque courbe de pic associée à un point maximum déterminé;

d. la détermination des courbes d'interpolation gaussienne respectives de chaque portion de la courbe de pic comprise entre les points d'inflexion de chaque courbe de pic respective;

e. la détermination d'une ligne de base dudit chromatogramme ou voltammogramme;

f. la détermination des points d'intersection de chaque courbe d'interpolation gaussienne et de la ligne de base;

g. la détermination d'une courbe de déconvolution de chaque courbe de pic par interpolation des points de la courbe de pic compris entre les points d'inflexion respectifs et des points d'intersection de la courbe d'interpolation gaussienne respective avec la ligne de base ; et

h. la détermination d'une valeur de concentration de chaque analyte comme la différence entre l'aire sous-tendue par la courbe de déconvolution et l'aire sous-tendue par la ligne de base, comprise entre les valeurs de temps correspondant aux points d'intersection de la courbe d'interpolation gaussienne respective et de la ligne de base.

2. Le procédé selon la revendication 1, comprenant en outre:

i. la représentation sur un graphique cartésien de chaque courbe de pic et de la courbe de déconvolution respective, la distance de la valeur de l'abscisse des points maximums desdites courbes de pic par rapport à une origine prédéterminée dans la dimension temporelle, et la valeur de la concentration de chaque analyte.

3. Le procédé selon la revendication 1 ou 2, dans lequel la détermination des points d'inflexion de ladite courbe de pic comprend l'identification d'une paire de points d'inflexion les plus proches du point maximum de ladite courbe de pic, respectivement un premier point d'inflexion précédant ledit point maximum de la courbe de pic et un second point d'inflexion suivant ledit point maximum de la courbe de pic.

4. Le procédé selon l'une quelconque des revendications précédentes, dans lequel la détermination d'une ligne de base comprend une interpolation linéaire d'un ensemble prédéterminé de points minimums du chromatogramme ou voltammogramme.

5. Le procédé selon la revendication 4, dans lequel ledit ensemble prédéterminé de points minimums du chromatogramme ou voltammogramme n'inclut pas de points minimums compris entre deux points maximums, dont la différence de temps d'élution est inférieure à une valeur prédéterminée d'un seuil d'exclusion.

6. Le procédé selon l'une quelconque des revendications précédentes, dans lequel la détermination de la courbe de déconvolution de chaque courbe de pic comprend une interpolation polynomiale de Hermite de troisième degré des points de la courbe de pic entre les points d'inflexion respectifs et les points d'intersection de la courbe d'interpolation gaussienne respective avec la ligne de base.

7. Le procédé selon l'une quelconque des revendications précédentes, comprenant la comparaison de la valeur de concentration déterminée d'un analyte avec une valeur seuil minimale de concentration et l'exclusion de ladite valeur de concentration déterminée si elle est inférieure à ladite valeur seuil minimale de concentration.

8. Le procédé selon l'une quelconque des revendications précédentes, comprenant la sélection d'un intervalle de temps dudit chromatogramme ou voltammogramme.

9. Un système informatique inclus dans un système d'analyse chromatographique comprenant un détecteur d'absorbance, ledit système informatique étant programmé pour mettre en œuvre un procédé pour déterminer les temps de rétention et les valeurs de concentration d'une pluralité d'analytes dans un mélange dans un processus d'analyse chromatographique ou voltamétrique, selon l'une quelconque des revendications 1 à 8.

10. Un programme informatique ou un groupe de programmes exécutables par un système informatique inclus dans un système d'analyse chromatographique comprenant un détecteur d'absorbance, ledit programme informatique ou groupe de programmes comprenant un ou plusieurs modules de code pour mettre en œuvre un procédé pour déterminer les temps de rétention et les valeurs de concentration d'une pluralité d'analytes dans un mélange dans un processus d'analyse chromatographique, selon l'une quelconque des revendications 1 à 8.

FIG.1

FIG.2a

FIG.2b

FIG.2c

FIG.2d

**FIG.3a**
(PRIOR ART)

**FIG.3b**
(PRIOR ART)

FIG.4a
(PRIOR ART)

FIG.4b
(PRIOR ART)

**FIG.5**

EP 4 251 993 B1

100 — IMPORT OF CHROMATOGRAPHIC CURVE DATA

110 — SELECTION OF CURVE INTERVAL

120 — DISPLAY ON CARTESIAN PLANE
AU (Absorbance Unit, on y-axis) vs t (time,min, on x-axis)

130 — IDENTIFICATION OF PEAKS

140 — IDENTIFICATION OF INFLECTION POINTS

150 — DETERMINATION OF INFLECTION POINTS CLOSE TO PEAK

160 — IDENTIFICATION OF VALLEYS

170 — i = 1

180 — i > VALLEY NUMBER

NO

YES

190 — $t_{i+1} - t_i < c$

NO → 210 — MAINTAINMENT OF VALLEY BETWEEN PEAK(i) AND PEAK(i+1)

YES → 200 — EXCLUSION OF VALLEY BETWEEN PEAK(i) AND PEAK(i+1)

220 — BASELINE INTERPOLATION

230 — GAUSSIAN CURVE SUBTENDED TO EACH PEAK

240 — INTERSECTION GAUSSIAN CURVE AND BASELINE

250 — DETERMINATION OF DECONVOLUTED CURVE

260 — AUC (Area Under The Curve) CALCULATION

270 — GRAPHIC REPRESENTATION
1) DECONVOLUTED CURVE OVER ORIGINAL PEAK
2) PEAK RETENTION TIME
3) AUC

FIG.6

FIG.7

**FIG.8**

```
                    ( 130 )
                       |
                       v
        +------------------------------+  ___ 1400
        | SECOND DERIVATIVE AT CURVE POINTS |
        +------------------------------+
                       |
                       v
        +------------------------------+  ___ 1405
        | CREATION OF SECOND DERIVATIVE VECTOR |
        +------------------------------+
                       |
                       v
        +------------------------------+  ___ 1410
        |            i = 2             |
        +------------------------------+
                       |
                       v
                    (   O   )
```

```
                       /\
                      /  \   ___ 1415
            SI       /    \
         +--------< |  i > n  |
  1440   |           \    /
  ___    |            \  /
 ( 150 )<--| END OF CYCLE |  \/
                              | NO
                              v
              /\                        /\
             /  \  ___ 1420            /  \  ___ 1430
            /    \          NO        /    \          NO
           | S (i) = -1  |---------->| S (i) = 1   |----->
           | S (i-1) = 0 ; 1 |        | S (i-1) = -1 |
            \    /                     \    /
             \  /                       \  /
              \/                         \/
              | SI                       | SI
              v  ___ 1425                v  ___ 1435
    +--------------------+    +--------------------+
    | IDENTIFICATION OF  |    | IDENTIFICATION OF  |
    | LEFT INFLECTION POINT |  | RIGHT INFLECTION POINT |
    +--------------------+    +--------------------+
```

**140**

1500
i = 1

1505
i > p

YES → 1520
j = 1

NO

1510
CALCULATION OF DISTANCE BETWEEN PEAK MAXIMUM AND LEFT INFLECTION POINT

1515
SELECTION OF LEFT INFLECTION POINT AT MINIMUM DISTANCE

1525
j > p

YES

1540
END OF CYCLE → **160**

NO

1530
CALCULATION OF DISTANCE BETWEEN PEAK MAXIMUM AND RIGHT INFLECTION POINT

1535
SELECTION OF RIGHT INFLECTION POINT AT MINIMUM DISTANCE

**FIG.9**

**FIG.10**

```
                    ( 150 )
                       │
                       ▼
        ┌──────────────────────────────┐
        │  FIRST DERIVATIVE AT CURVE     │ ─── 1600
        │  POINTS                        │
        └──────────────────────────────┘
                       │
                       ▼
        ┌──────────────────────────────┐
        │           i = 2               │ ─── 1605
        └──────────────────────────────┘
                       │
                       ▼
                      ( )◄────────────────────┐
                       │                       │
                       ▼                       │
                    ◇ i > n ◇  ─── 1610        │
         YES  ◄──────                          │
                       │ NO                    │
         ┌──────────┐  ▼                       │
  1625 ─│END OF    │  ◇ tgα(i) > 0 ◇  ─── 1615 │
         │ CYCLE    │  ◇ tgα(i-1) < 0 ◇──NO─────┤
         └──────────┘       │                  │
              │             │ YES              │
              ▼             ▼                   │
           ( 170 )   ┌────────────────────┐    │
                     │ MINIMUM             │──1620
                     │ IDENTIFICATION      │────┘
                     └────────────────────┘
```

$i > n$  (1610)

$tg\alpha_{(i)} > 0$
$tg\alpha_{(i-1)} < 0$  (1615)

MINIMUM IDENTIFICATION (1620)

END OF CYCLE (1625)

FIG.11

FIG.12

**FIG.13**

**FIG.14**

**FIG.15a**

**FIG.15b**